# FASCICULE DE BREVET EUROPEEN

(11) **EP 3 016 768 B1**
(45) Date de publication et mention de la délivrance du brevet: **11.12.2019**
(21) Numéro de dépôt: 14736367.5
(22) Date de dépôt: 02.07.2014
(51) Int. Cl.: B23B 27/10, B23B 29/04, B23B 31/00, B23B 27/00

(54) **SYSTEME D'USINAGE**
BEARBEITUNGSSYSTEM
SYSTEM FOR MACHINING

(30) Priorité: 04.07.2013 EP 13175192
(43) Date de publication de la demande: 11.05.2016
(73) Titulaire: Applitec Moutier S.A., 2740 Moutier (CH)
(72) Inventeur: KOHLER, Pascal, CH-2740 Moutier (CH); SCHALLER, Vincent, CH-2742 Perefitte (CH)
(74) Mandataire: Bovard SA Neuchâtel
(86) Numéro de dépôt international: PCT/EP2014/064109
(87) Numéro de publication internationale: WO 2015/000985

(56) Documents cités:
- WO-A1-2012/111710
- DE-A1- 19 800 424
- DE-A1-102004 053 511
- DE-A1-102005 039 174

## Description

### Domaine technique

La présente invention se rapporte au domaine de l'usinage et concerne, plus particulièrement un système d'usinage selon le préambule de la revendication 1, comportant un porte-outil et un barreau d'usinage destiné à usiner une pièce, le barreau étant disposé dans un alésage que comporte le porte-outil. Dans ce genre de système, l'assemblage du barreau sur le porte-outil et son positionnement longitudinal et angulaire est primordial, afin d'optimiser les étapes de réglage de la machine lors d'un changement d'outil, mais également afin de garantir une bonne rigidité et un maintien parfait de la position du barreau au cours d'une opération d'usinage.

### Etat de la technique

On connait du document DE19800424 un système d'usinage selon le préambule de la revendication 1, dans lequel le positionnement du barreau d'usinage sur le porte-outil est assuré par une double-butée. L'arrière du barreau comprend une face biseautée, agencée pour coopérer avec une goupille formant une butée arrière. Elle permet également d'orienter angulairement le barreau d'usinage. De plus, le barreau est solidaire d'une bague formant une butée avant, sur laquelle un écrou de serrage exerce un appui longitudinal, pour mettre le barreau en appui sur ses butées avant et arrière.

Ainsi, le barreau d'usinage est maintenu par la pression longitudinale exercée par l'écrou de serrage, qui doit être fortement serré. Le barreau d'usinage doit être ajusté très exactement avec l'alésage, car le maintien du barreau à l'intérieur de l'alésage n'est effectué par aucun serrage radial ou concentrique, ce qui, en cours d'usinage, peut engendrer des vibrations ainsi qu'une incertitude de positionnement du barreau d'alésage.

On connait également le document DE1020050399174 qui décrit un système d'usinage dans lequel un barreau de coupe est assemblé avec un porte-outil à l'aide d'un manchon déformable. De la même façon que pour le document précédent, l'arrière du barreau de coupe comporte une face biseautée destinée à venir en appui contre une goupille. Le manchon déformable est serré sur une portion cylindrique à l'avant du barreau de manière à positionner radialement le barreau et à transmettre un effort longitudinal pour maintenir la face biseautée contre la goupille et assurer le positionnement longitudinal et angulaire du barreau. De part sa nature déformable, et parce qu'il est situé sur l'écrou de serrage, le manchon ne permet pas de garantir un positionnement radial précis du barreau de coupe en référence au porte-outil et de maintenir sa position sous l'effort de coupe : De plus, l'effort longitudinal transmis est limité par la force de serrage et par l'adhérence du manchon sur le barreau

La présente invention a pour but de proposer une variante avantageuse d'un système d'usinage, exempte des inconvénients susmentionnés et dont la rigidité du serrage et la précision du positionnement sont améliorées.

### Divulguation de l'invention

De façon plus précise, l'invention concerne un système d'usinage tel que proposé dans les revendications.

### Brève description des dessins

D'autres détails de l'invention apparaîtront plus clairement à la lecture de la description qui suit, faite en référence au dessin annexé dans lequel :

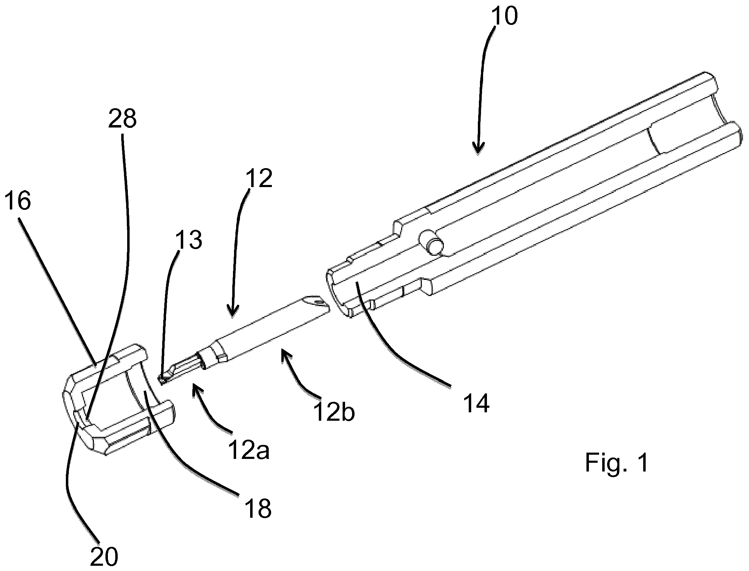

- la figure 1 est une vue en perspective, en éclaté et en écorché partiel, d'un système d'usinage selon l'invention,
- les figures 2a et 2b sont deux vues en perspective et en écorché, selon deux angles différents, du système d'usinage de la figure 1, les différents éléments étant assemblés les uns aux autres,
- la figure 3 est une vue en coupe du système assemblé et la figure 4 est un agrandissement d'une partie de la figure 3, et
- la figure 5 illustre un autre détail du système d'usinage selon l'invention,
- les figures 6a et 6b illustrent un deuxième mode de réalisation d'un système d'usinage selon l'invention,
- la figure 7 illustre un troisième mode de réalisation d'un système d'usinage selon l'invention,
- la figure 8 illustre un quatrième mode de réalisation d'un système d'usinage selon l'invention,
- les figures 9 et 10 illustrent des détails d'un système d'usinage selon l'invention.

### Mode de réalisation de l'invention

L'invention concerne un système d'usinage comprenant un porte-outil 10 et un barreau d'usinage 12 intérieur destiné à usiner une cavité dans une pièce et muni d'une arête de coupe 13.

Le porte-outil 10 est creux et comprend un alésage 14 à l'intérieur duquel le barreau 12 est destiné à prendre place. L'alésage 14 et le barreau 12 sont de préférence cylindriques et le diamètre du barreau 12 est légèrement inférieur à celui de l'alésage 14.

Le système comprend également un écrou 16 de serrage agencé pour être serré sur l'extrémité du porte-outil 10 comprenant l'alésage 14. De préférence, l'écrou 16 est agencé de manière à être vissé sur la paroi extérieure du porte-outil 10, au niveau de l'alésage 14. Le profil intérieur de l'écrou 16 peut également présenter des portions de différents diamètres, la portion 18 située à l'extrémité ouverte de l'écrou 16 peut avantageusement être ajustée sur une portion correspondante de la paroi extérieure du porte-outil 10, pour améliorer le guidage de l'écrou 16 lors de son serrage. L'écrou 16 est encore dimensionné de manière à ne pas venir en butée contre le porte-outil 10. Il peut présenter un moletage pour favoriser sa manutention.

L'écrou 16 comporte encore une ouverture 20 permettant le passage du barreau 12 lorsqu'il est serré sur le porte-outil 10. Le centre de l'ouverture 20 est coaxial avec le centre de l'alésage 14. Cette ouverture 20 revêt une importance particulière dans le cadre de la présente invention et sera décrite plus en détails ci-dessous.

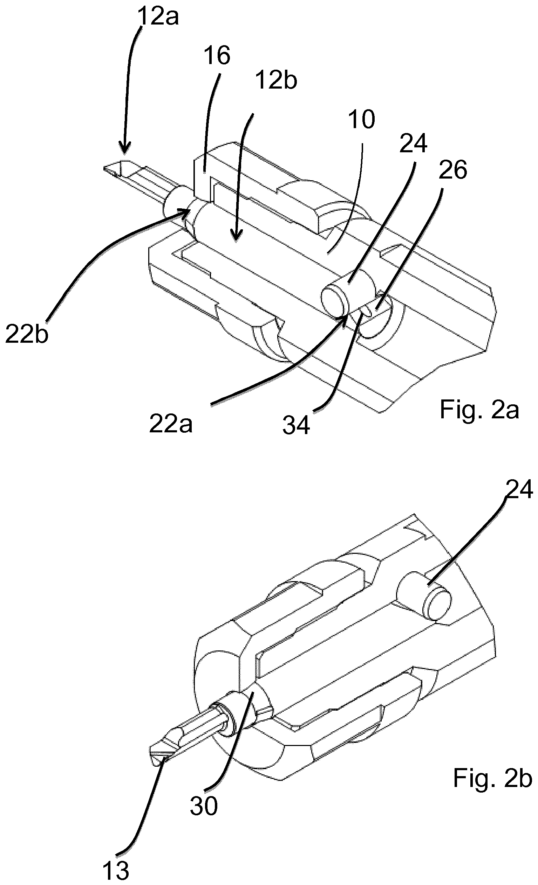

Le barreau d'usinage 12 comprend une zone de coupe 12a et une zone de maintien 12b. Comme on peut le voir particulièrement sur la figure 2a, lorsque le barreau 12 est assemblé sur le porte-outil 10, la zone de coupe 12a est extérieure au porte-outil 10 de manière à pouvoir réaliser l'opération d'usinage. A contrario, la zone de maintien 12b est située à l'intérieur du porte-outil 10.

Selon l'invention, le système d'usinage comprend une première 22a et une deuxième 22b zones d'appui, respectivement à la première extrémité de la zone de maintien 12b située du côté opposé à l'arête de coupe 13, et à la deuxième extrémité de la zone de maintien 12b.

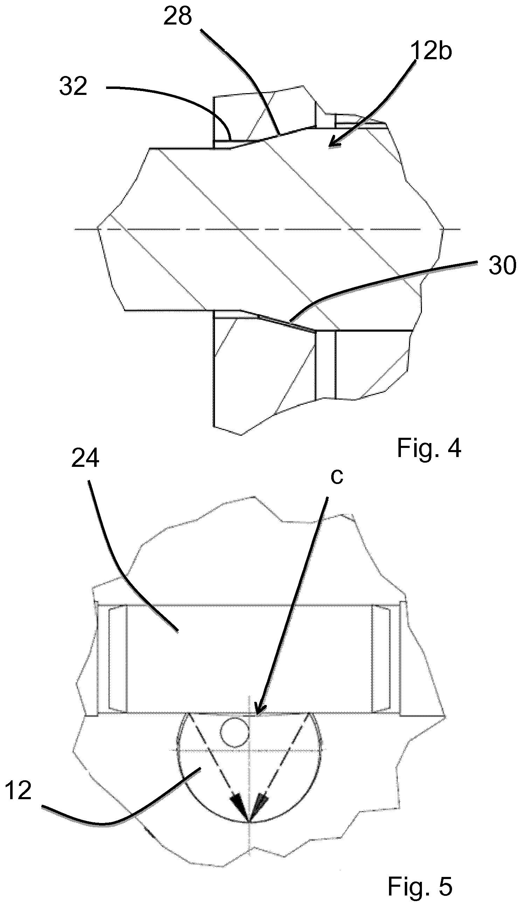

La première zone d'appui 22a est formée, d'une part, par une barrette d'appui 24, solidaire du porte-outil 10 et traversant l'alésage 14 parallèlement à l'arête de coupe 13 et perpendiculairement à l'axe longitudinal du porte-outil 10. D'autre part, la première extrémité de la zone de maintien 12b comprend une surface biseautée 26, définissant une ligne d'appui en contact avec la barrette 24 perpendiculaire aux forces de coupe subies par le barreau 12 (figure 5). En variante et comme proposé à la figure 5 la surface biseautée pourrait être concave (c), la ligne d'appui de la surface concave étant perpendiculaire aux forces de coupe.

La barrette 24 est avantageusement excentrée par rapport au centre de l'alésage 14, c'est-à-dire que l'axe central de la barrette 24 ne croise pas le centre de l'alésage 14. Plus particulièrement, la barrette peut être partiellement noyée dans la paroi de l'alésage 14.

Ainsi, la mise en appui de la surface biseautée 26 sur la barrette 24, manuellement ou par l'effet du serrage de l'écrou 16, comme on le comprendra ci-après, permet de définir la position longitudinale et l'orientation angulaire du barreau 12.

La deuxième zone d'appui 22b est formée par une première portion conique 28 de la paroi de l'ouverture 20 de l'écrou 16 de serrage, agencée pour coopérer avec une deuxième portion conique 30 du barreau d'usinage 12, ménagée à la deuxième extrémité de la zone de maintien 12b. Plus particulièrement, la première portion conique 28 s'élargit du côté de l'intérieur de l'écrou 16. Du côté du petit diamètre du cône, la première portion conique 28 pourra être interrompue et prolongée par une portion droite 32, cylindrique, de diamètre supérieur à la zone correspondante du barreau 12, afin de garantir que l'appui du barreau 12 sur l'ouverture 20 se fasse exclusivement au niveau de la deuxième portion conique 30.

La deuxième portion conique 30 du barreau d'usinage 12 est asymétrique et n'est pas disposée de manière identique sur toute la périphérie du barreau 12. La deuxième portion conique 30 est agencée de manière à ce que le barreau d'usinage 12, dans sa zone diamétralement opposée à la deuxième zone d'appui 22b, ne soit pas en contact avec l'écrou 16 de serrage.

Comme on peut le voir particulièrement sur la figure 4, on peut obtenir une telle asymétrie en ménageant un dégagement diamétralement opposé à la deuxième zone d'appui 22b. On peut, pour ce faire, réaliser la deuxième portion conique en deux parties, une première pour prendre appui contre la première portion conique 28 de l'écrou 16, et une deuxième agencée pour ne pas être en appui contre cette portion conique 28 de l'écrou. La deuxième partie peut présenter une portion conique de diamètre inférieur ou être décalée longitudinalement du côté de la première extrémité du barreau 12. On pourra adoucir le seuil formé entre les deux parties de la deuxième portion conique.

On pourra encore relever que l'asymétrie du contact entre le barreau d'usinage 12 et l'écrou de serrage pourrait être obtenue en ménageant un dégagement au niveau de l'écrou plutôt que sur l'outil.

Les première 22a et deuxième 22b zones d'appui sont agencées de manière à ce que la force de serrage F de l'écrou crée une première force d'appui F1 et une deuxième force d'appui F2 concourantes et situées dans un plan dans lequel s'exercent les forces de coupe F3 et passant par l'axe longitudinal du porte-outil 10. En d'autres termes, les zones d'appui génèrent une triangulation de forces permettant de contraindre le barreau 12 contre la paroi intérieure de l'alésage 14. Grâce au fait que le barreau 12 est de diamètre légèrement inférieur à celui de l'alésage 14, le barreau est mis en appui selon une ligne clairement définie, cette ligne étant incluse dans le plan qui contient les forces F1, F2 et F3. De manière avantageuse, la contrainte générée par les zones d'appui s'exerce dans la même direction que les contraintes générées par les forces de coupe. L'outil étant déjà parfaitement positionné, de manière particulièrement rigide par son appui dans l'alésage 14, les forces de coupe n'ont pas d'incidence sur la position du barreau 12.

Ainsi, le système d'usinage selon l'invention permet non seulement de positionner, sans erreur, longitudinalement et angulairement le barreau d'usinage 12 en référence au porte-outil 10, mais de plus, il procure un effet de serrage latéral du barreau 12, le long de la paroi interne de l'alésage 14. Les forces de maintien sont ainsi mieux réparties et il n'est pas nécessaire de serrer fortement l'écrou 16 pour obtenir un positionnement optimal. On réduit d'autant les contraintes appliquées au niveau de la barrette. L'amélioration du contact entre le barreau 12 et le porte-outil 10 permet également de réduire les vibrations en cours d'usinage.

L'homme du métier pourra ajuster le pas de vis de l'écrou 16 et les angles de cônes, selon les forces de serrages souhaitées et selon les contraintes d'usinage à tenir.

On pourra encore prévoir que le barreau d'usinage 12 comprend une ouverture traversante 34 orientée selon l'axe longitudinal dudit barreau 12, permettant le passage de lubrifiant vers l'arête de coupe.

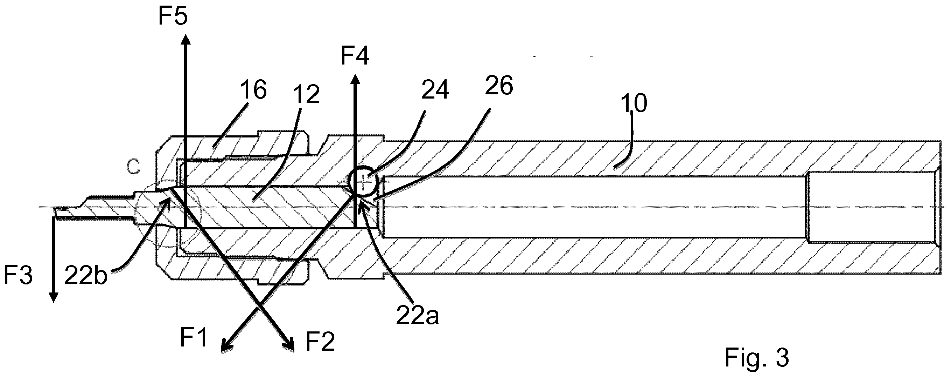

Le serrage latéral du barreau 12 contre l'alésage 14 se fait parallèlement à la direction de coupe définie par la force de coupe F3, c'est-à-dire selon la direction verticale en référence aux figures 3, 6a, 7 et 8. Les forces d'appui concourantes F1 et F2 peuvent se décomposer en composantes longitudinales opposées et en composantes verticales parallèles et de même sens, s'opposant aux forces de réaction verticales F4 et F5 du porte-outil 10 sur le barreau 12 respectivement dans les première 22a et deuxième 22b zones d'appui.

En plus des directions longitudinale et verticale du plan de la figure 3, on peut définir une direction transversale perpendiculaire au plan de cette même figure 3 et donc parallèle à l'axe de la barrette 24. On ne confondra pas la direction de serrage latéral précédemment décrite, qui est également la direction de coupe, avec la direction transversale qui est perpendiculaire à la direction de serrage latéral et à la direction longitudinale. Dans l'ensemble des figures, la direction de serrage latéral et la direction de coupe sont la direction verticale.

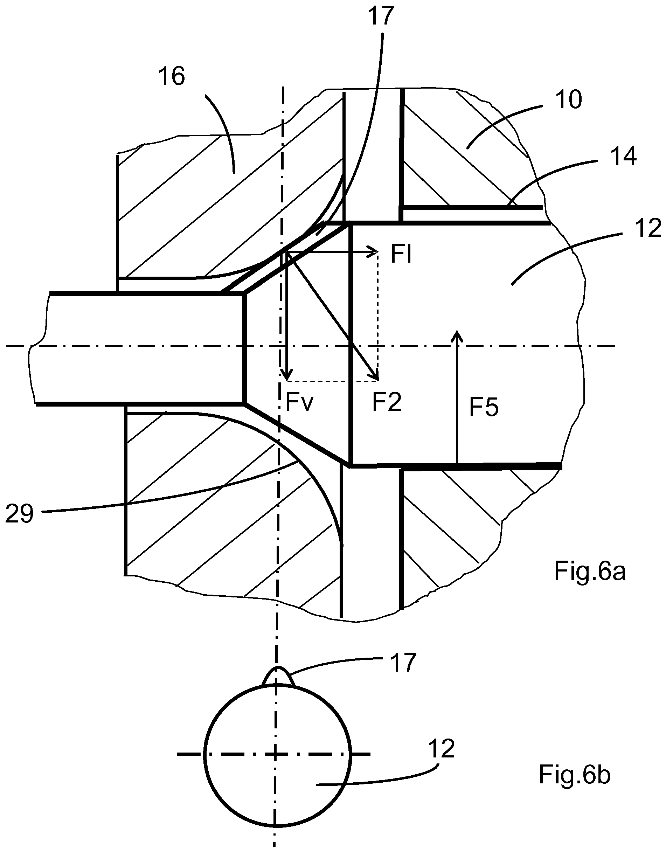

Dans un deuxième mode de réalisation, représenté figure 6a, l'ouverture 20 de l'écrou 16 présente une surface de révolution 29 coaxiale avec le filetage de l'écrou 16 et l'alésage 14, et de rayon croissant de façon à ce que l'ouverture s'élargisse vers l'intérieur de l'écrou 16 et donc vers le porte-outil 10. La surface de révolution 29 peut, par exemple, être une surface torique comme représenté, ou bien un cône comme précédemment ou bien une surface de révolution permettant de raccorder de façon continue une section circulaire de rayon minimum à une section circulaire de rayon maximum.

La surface de révolution 29 de l'écrou 16 est destinée à coopérer avec la deuxième zone d'appui 22b du barreau d'usinage 12 se trouvant sur un bossage 17 s'étendant dans un plan vertical dans la partie supérieure du barreau d'usinage en référence à la figure 6a. Une section du barreau 12 dans la zone d'appui 22b destiné à venir au contact de l'écrou 16 est représentée sur la figure 6b. Le sommet du bossage 17 est le point le plus éloigné de la section par rapport à l'axe du barreau d'usinage si bien que la surface de révolution entre en contact avec l'arête sommitale du bossage 17 lors du serrage de l'écrou 16.

Les intersections de la surface de révolution 29 et du bossage 17 avec un plan vertical définissent des profils qui apparaissent sur la figure 6a. De préférence, au moins l'un des deux profils est convexe de manière à ce que le contact de la surface de révolution 29 avec le barreau 12 se produise de façon ponctuelle sur l'arête sommitale du bossage 17.

Dans le mode de réalisation présenté à la figure 6a, le profil de la surface de révolution 29 est convexe et le profil du bossage est droit.

Dans le cas particulier où la surface de révolution est conique et le profil du bossage est rectiligne selon le même angle, les deux profils sont parallèles et le contact entre l'écrou 16 et le barreau 12 se produit sur une portion linéaire de l'arête sommitale du bossage 17.

Dès que l'écrou 16 entre en contact du barreau 12, l'écrou 16 applique une force d'appui F2 sur le barreau 12 dans une direction normale à la surface de contact. La force F2 se décompose selon une composante longitudinale Fl parallèle à l'axe du barreau et une composante verticale Fv de même direction que l'effort de coupe. En continuant à serrer l'écrou 16, la composante verticale Fv positionne et maintient le barreau 12 contre la paroi de l'alésage 14 au niveau de la deuxième zone d'appui 22b. L'alésage 14 exerce une force de réaction F5 opposée à la force Fv sur le barreau 12 au niveau de la deuxième zone d'appui 22b. Dans le même temps, la surface biseautée vient en appui contre la barrette 24 sous l'action de la composante longitudinale Fl si bien que l'extrémité du barreau 12 du côté opposé à l'arête de coupe est également plaquée contre la paroi de l'alésage 14 selon un effort parallèle à la composante verticale Fv. Ainsi, une fois l'écrou 16 serré, le barreau d'usinage est parfaitement positionné et maintenu, en référence au porte-outil 10, aux deux extrémités de la zone de maintien 12b dans les directions verticale et longitudinale du plan de la figure 6a.

Lorsque l'effort de coupe est appliqué parallèlement à la composante verticale Fv, le barreau 12 est déjà en appui contre la paroi inférieure de l'alésage 14 au niveau des première 22a et deuxième 22b zones d'appui, ce qui assure le maintien du barreau et son positionnement précis lors de l'opération d'usinage.

Dans un autre mode de réalisation non représenté, le barreau d'usinage 12 peut comporter deux bossages symétriques par rapport au plan vertical de la figure 6a et situés dans la partie supérieure du barreau d'usinage en référence aux figures 6a ou 6b. L'écrou 16 arrive simultanément au contact des deux bossages lors du serrage et exerce deux forces d'appui ayant des composantes longitudinales et verticales identiques et des composantes transversales opposées. Les composantes transversales opposées appliquées par l'écrou 16 sur la deuxième zone d'appui du barreau 12 permettent de maintenir transversalement le barreau 12 lors de l'opération d'usinage.

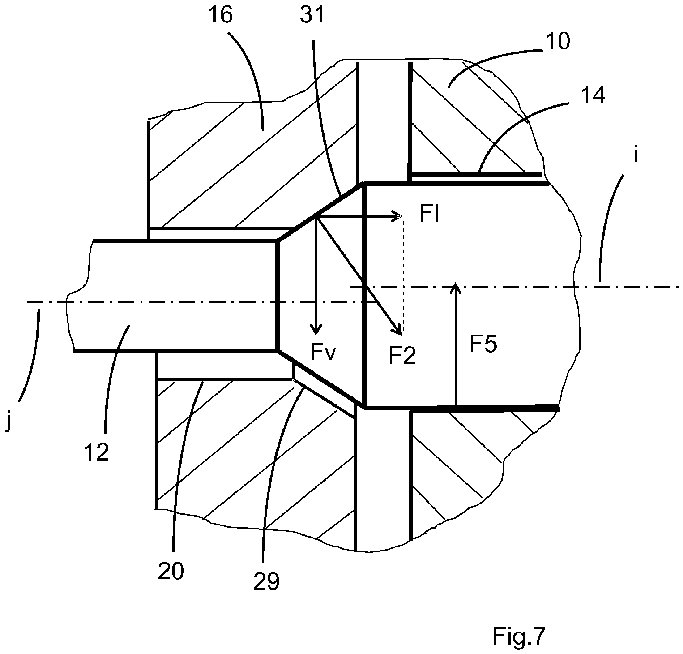

Dans un troisième mode de réalisation représenté à la figure 7, l'axe de l'écrou j et l'axe de l'alésage i ne sont plus confondus mais sont parallèles dans un même plan vertical contenant l'effort de coupe F et présentent un entre-axe supérieur à la moitié du jeu vertical entre le barreau 12 et l'alésage 14. L'axe de l'écrou j est aussi bien celui du filetage de l'écrou 16 que celui de l'ouverture 20 et de la surface de révolution 29. Dans le mode de réalisation représenté, la surface de révolution 29 est un cône destiné à venir en appui contre une portion 31 du barreau d'usinage 12. La portion 31 sera de préférence une surface de révolution ce qui permet de simplifier l'usinage du barreau 12 comparativement aux modes de réalisation précédents. Dans le mode de réalisation représenté à la figure 7, la portion 31 est un cône de même angle que celui de la surface de révolution 29. De la même façon que dans le mode de réalisation précédent, la surface de révolution 29 et la portion 31 peuvent avoir des profils variés de manière à ce que le point de contact de l'écrou 16 avec le barreau 12 se situe dans le demi-plan vertical supérieur passant par l'axe du barreau 12 en référence à la figure 7. Lors du serrage de l'écrou 16, les cônes de la surface de révolution 29 et de la portion 31 rentrent en contact l'un de l'autre selon un segment linéaire situé dans le plan vertical de la figure 7. En poursuivant le serrage de l'écrou 16, la surface de révolution 29 et la portion conique 31 glissent l'une sur l'autre jusqu'à ce que le barreau d'usinage 12 soit parfaitement positionné et maintenu, en référence au porte outil 10, aux deux extrémités de la zone de maintien 12b dans les directions verticale et longitudinale du plan de la figure 7.

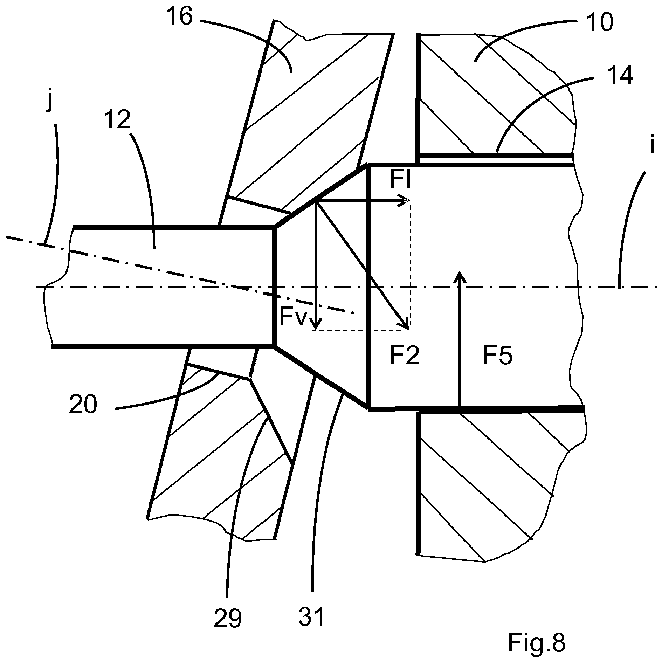

Dans un quatrième mode de réalisation représenté à la figure 8, l'axe j de l'écrou 16 n'est pas parallèle mais est sécant avec l'axe i de l'alésage 14. L'axe j de l'écrou 16 est toujours commun au filetage de l'écrou 16, à l'ouverture 20 et à la surface de révolution 29. Dans le mode de réalisation représenté, la surface de révolution 29 et la portion 31 sont des cônes dont la différence d'angle d'ouverture correspond à l'angle formé par les axes i et j de manière à ce que l'intersection de ces cônes avec le demi-plan supérieur de la figure 8 soit des portions de droites parallèles. Dans cette configuration particulière la zone de contact entre le barreau 12 et l'écrou 16 est une portion linéaire située dans le demi-plan vertical supérieur de la figure 8. Comme dans les modes de réalisation précédents, la surface de révolution 29 et à la portion 31 peuvent présenter d'autres formes qui donneraient une zone de contact ponctuelle toujours située dans le demi-plan vertical supérieur de la figure 8. Lors du serrage de l'écrou 16, celui-ci se déplace le long de son axe j, la surface de révolution 29 entre au contact de la portion 31 et glisse sur celle-ci en exerçant sur la deuxième zone d'appui une force F2 qui se décompose en une composante longitudinale Fl et une composante verticale Fv. Une fois l'écrou 16 serré, le barreau 12 est positionné et maintenu, en référence au porte-outil 10, aux deux extrémités de la zone de maintien 12b dans les directions verticale et longitudinale du plan de la figure 8.

La configuration dans laquelle les axes de l'écrou et de l'alésage sont sécants permet, en outre, de réaliser le montage et le démontage du barreau d'usinage sans avoir à retirer l'écrou du porte-outil, ce qui simplifie les opérations de changement d'outil. Une butée peut être prévue entre l'écrou et le porte-outil, qui empêche le dévissage totale de l'écrou et qui définit une position extrême dévissée de l'écrou dans laquelle le barreau d'usinage est libre de passer au travers de l'écrou selon la direction longitudinale de l'alésage du porte outil. L'homme du métier saura adapter les dimensions de l'écrou, du barreau d'usinage et du porte-outil pour rendre possible le montage et le démontage, par exemple en augmentant le diamètre de l'ouverture 20 en référence à la figure 8.

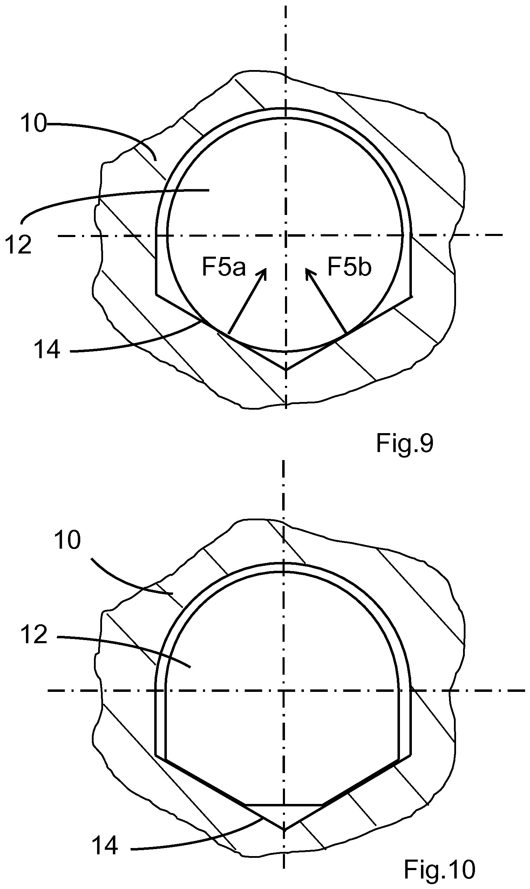

Avantageusement, la forme cylindrique de l'alésage 14 peut avoir une section non circulaire comme on peut en voir un exemple sur la figure 9. Lors du serrage de l'écrou 16, la composante verticale de la force d'appui F2 positionne et maintient le barreau d'usinage 12 dans un dièdre que comporte l'alésage 14. Le barreau 12 est ainsi positionné verticalement mais aussi transversalement et est maintenu sans jeu dans cette position lors des phases d'usinage. L'homme du métier saura adapter d'autre agencement permettant d'obtenir un résultat similaire. En particulier, une rainure en forme de dièdre peut également être usinée le long du barreau d'usinage.

Dans une autre variante dont un mode d'exécution est représenté sur la figure 10, la zone de maintien 12b du barreau 12 présente un appui plan sur plan avec l'alésage 14, qui permet de positionner et de maintenir angulairement le barreau d'usinage 12 en référence au porte-outil 10 selon l'axe longitudinal. Cette configuration permet de réduire la déformation angulaire subie par le barreau lors des phases d'usinage comparativement aux configurations de l'art antérieur dans lesquelles le barreau est seulement maintenu angulairement à l'extrémité du barreau opposée à l'arête de coupe. Dans l'exemple représenté à la figure 10, la section du barreau 12 est au moins partiellement polygonale de façon à ce que deux de ses faces sont parallèles aux faces du dièdre de l'alésage 14. Cet agencement permet de positionner et de maintenir le barreau 12 au niveau de la deuxième zone d'appui 22b en référence au porte-outil 10 selon la direction de coupe, selon la direction transversale et angulairement selon l'axe longitudinal.

## Revendications

1. Système d'usinage comprenant un porte-outil (10), un barreau d'usinage (12) et un écrou (16) de serrage dans lequel :
- le porte-outil (10) comprend un alésage (14) s'étendant selon une direction longitudinale et à l'intérieur duquel le barreau d'usinage (12) est destiné à prendre place,
- le barreau d'usinage comprend une zone de coupe (12a) munie d'une arête de coupe (13) destinée à usiner une pièce en étant soumise à un effort de coupe F3 définissant une direction de coupe perpendiculaire à la direction longitudinale, et une zone de maintien (12b) destinée à être agencée à l'intérieur du porte-outil (10), ladite zone de maintien comportant à ses deux extrémités une première zone d'appui (22a) du côté opposé à l'arête de coupe et une deuxième zone d'appui (22b) du côté de l'arête de coupe,
- l'écrou (16) de serrage est doté d'une ouverture (20) permettant le passage de l'arête de coupe (13) du barreau (12) et est agencé de manière à pouvoir être serré sur l'extrémité du porte-outil (10) comprenant l'alésage (14) et à coopérer avec le barreau d'usinage (12) au niveau de la deuxième zone d'appui (22b),
le système d'usinage étant agencé de manière à ce que le serrage de l'écrou (16) sur le porte-outil (10) génère des forces d'appui F1, F2 respectivement sur les première (22a) et deuxième (22b) zones d'appui du barreau (16) qui positionnent et maintiennent le barreau d'usinage en référence au porte-outil (10) et au niveau de la première zone d'appui (22a), selon la direction longitudinale et la direction de coupe,
**caractérisé en ce que** la paroi de l'ouverture (20) de l'écrou (16) de serrage comporte au moins une surface de révolution (28,29) coaxiale avec le filetage de l'écrou (16), la surface de révolution (29) présentant un rayon croissant de sorte que l'ouverture s'élargisse vers l'intérieur de l'écrou (16) et du porte-outil (10) et **en ce que** la deuxième zone d'appui (22b) est formée par une deuxième portion conique (30) du barreau d'usinage (12), ménagée à la deuxième extrémité de la zone de maintien (12b) de telle manière que la force d'appui F2 de l'écrou (16) sur le barreau (12) au niveau de la deuxième zone d'appui (22b) comporte une composante parallèle à la direction de coupe permettant de positionner et de maintenir le barreau (16) en référence au porte-outil (10) et au niveau de la deuxième zone d'appui (22b), selon la direction de coupe.

2. Système d'usinage selon la revendication 1, **caractérisé en ce que** la surface de révolution (29) est une surface torique.

3. Système d'usinage selon la revendication 1, **caractérisé en ce que** la surface de révolution (28) est formée par une première portion conique (28).

4. Système d'usinage selon la revendication 3, **caractérisé en ce que** la première portion conique (28) est interrompue et prolongée par une portion droite (32), cylindrique, de diamètre supérieur à la zone correspondante du barreau (12).

5. Système d'usinage selon l'une quelconque des revendications 1 à 4, **caractérisé en ce que** la deuxième portion conique (30) du barreau (12) est asymétrique.

6. Système d'usinage selon la revendication 5, **caractérisé en ce que** ledit barreau (12) comporte un dégagement diamétralement opposé à la deuxième zone d'appui (22b).

7. Système d'usinage selon l'une quelconque des revendications 1 à 6, **caractérisé en ce que** la deuxième zone d'appui (22b) comporte un bossage destiné à entrer en contact avec la surface de révolution (28, 29) de l'écrou (16).

8. Système d'usinage selon l'une quelconque des revendications 1 à 7, **caractérisé en ce que** l'axe i de l'alésage (14) et l'axe j de l'écrou (16) sont parallèles et non confondus et **en ce que** le plan défini par les axes i et j est parallèle à la direction de coupe.

9. Système d'usinage selon l'une quelconque des revendications 1 à 7, **caractérisé en ce que** l'axe i de l'alésage (14) est sécant avec l'axe j de l'écrou (16) et **en ce que** le plan défini par les axes i et j est parallèle à la direction de coupe.

10. Système d'usinage selon l'une des revendications précédentes, **caractérisé en ce que** la section de l'alésage (14) n'est pas circulaire.

11. Système d'usinage selon la revendication 10, **caractérisé en ce que** la zone de maintien (12b) du barreau d'usinage (12) présente un appui plan sur plan avec l'alésage (14).

## Patentansprüche

1. Bearbeitungssystem mit einem Werkzeughalter (10), einem Drehling (12) und einer Spannmutter (16), bei dem:
- der Werkzeughalter (10) eine Bohrung (14) umfasst, die sich in einer Längsrichtung erstreckt und die der Aufnahme des Drehlings (12) dient,
- der Drehling einen Schnittbereich umfasst (12a), der mit einer Schneide (13) zur Bearbeitung eines Werkstücks versehen ist und auf den eine Schnittkraft F3 ausgeübt wird, die eine Schnittrichtung senkrecht zur Längsrichtung definiert, und einen Haltebereich (12b), der im Innern des Werkzeughalters (10) angeordnet ist, wobei der Haltebereich an seinen beiden Enden einen ersten Auflagebereich (22a) an der Seite gegenüber der Schneide, und einen zweiten Auflagebereich (22b) an der Seite der Schneide umfasst,
- die Spannmutter (16) mit einer Öffnung (20) versehen ist, durch welche die Schneide (13) des Drehlings (12) hindurchgeführt werden kann, und sie so angeordnet ist, dass sie auf das Ende des Werkzeughalters (10) mit der Bohrung (14) gespannt werden und mit dem Drehling (12) am zweiten Auflagebereich (22b) zusammenwirken kann,
wobei das Bearbeitungssystem so angeordnet ist, dass das Spannen der Mutter (16) auf dem Werkzeughalter (10) Auflagekräfte F1, F2 jeweils auf dem ersten (22a) und dem zweiten (22b) Auflagebereich des Drehlings (16) erzeugt, welche den Drehling am ersten Auflagebereich (22a) in Bezug auf den Werkzeughalter (10) in Längsrichtung und in Schnittrichtung positioniert und hält,
**dadurch gekennzeichnet, dass** die Wand der Öffnung (20) der Spannmutter (16) mindestens eine Rotationsfläche (28, 29) koaxial zum Gewinde der Mutter (16) umfasst, wobei die Rotationsfläche (29) einen zunehmenden Radius aufweist, so dass sich die Öffnung zum Innern der Mutter (16) und des Werkzeughalters (10) hin erweitert, und dadurch, dass der zweite Auflagebereich (22b) durch einen zweiten konischen Abschnitt (30) des Drehlings (12) gebildet wird, der am zweiten Ende des Haltebereichs (12b) ausgebildet ist, sodass die Auflagekraft F2 der Mutter (16) auf dem Drehling (12) am zweiten Auflagebereich (22b) eine Komponente parallel zur Schnittrichtung umfasst, die das Positionieren und Halten des Drehlings (16) in Bezug auf den Werkzeughalter (10) am zweiten Auflagebereich (22b) in der Schnittrichtung ermöglicht.

2. Bearbeitungssystem nach Anspruch 1, **dadurch gekennzeichnet, dass** die Rotationsfläche (29) einer torische Fläche ist.

3. Bearbeitungssystem nach Anspruch 1, **dadurch gekennzeichnet, dass** die Rotationsfläche (28) durch einen ersten konischen Abschnitt (28) gebildet wird.

4. Bearbeitungssystem nach Anspruch 3, **dadurch gekennzeichnet, dass** der erste konische Abschnitt (28) durch einen geraden zylindrischen Abschnitt (32) mit einem Durchmesser größer dem des entsprechenden Bereichs des Drehlings (12) unterbrochen und verlängert wird.

5. Bearbeitungssystem nach einem der Ansprüche 1 bis 4, **dadurch gekennzeichnet, dass** der zweite konische Abschnitt (30) des Drehlings (12) asymmetrisch ist.

6. Bearbeitungssystem nach Anspruch 5, **dadurch gekennzeichnet, dass** der Drehling (12) eine Ausnehmung diametral gegenüber dem zweiten Auflagebereich (22b) umfasst.

7. Bearbeitungssystem nach einem der Ansprüche 1 bis 6, **dadurch gekennzeichnet, dass** der zweite Auflagebereich (22b) einen Nocken umfasst, der in Kontakt mit der Rotationsfläche (28,29) der Mutter (16) tritt.

8. Bearbeitungssystem nach einem der Ansprüche 1 bis 7, **dadurch gekennzeichnet, dass** die Achse i der Bohrung (14) und die Achse j der Mutter (16) parallel zueinander verlaufen und nicht zusammenfallen, und dadurch, dass die durch die Achsen i und j abgegrenzte Ebene parallel zur Schnittrichtung verläuft.

9. Bearbeitungssystem nach einem der Ansprüche 1 bis 7, **dadurch gekennzeichnet, dass** die Achse i der Bohrung (14) die Achse j der Mutter (16) schneidet und dadurch, dass die durch die Achsen i und j definierte Ebene parallel zur Schnittrichtung verläuft.

10. Bearbeitungssystem nach einem der vorhergehenden Ansprüche, **dadurch gekennzeichnet, dass** der Querschnitt der Bohrung (14) nicht rund ist.

11. Bearbeitungssystem nach Anspruch 10, **dadurch gekennzeichnet, dass** der Haltebereich (12b) des Drehlings (12) eine Auflage in einer Ebene mit der Bohrung (14) aufweist.

## Claims

1. Machining system comprising a tool holder (10), a machining bar (12) and a clamping nut (16), in which:
- the tool holder (10) has a bore (14) extending in a longitudinal direction and within which the machining bar (12) is intended to be placed,
- the machining bar comprises a cutting area (12a) provided with a cutting edge (13) for machining a workpiece by being subjected to a cutting force F3 defining a cutting direction perpendicular to the longitudinal direction, and a holding area (12b) designed to be arranged inside the tool holder (10), said holding area having at its two ends a first support area (22a) on the side opposite the cutting edge and a second support area (22b) on the cutting edge side,
- the clamping nut (16) is provided with an opening (20) allowing the cutting edge (13) of the bar (12) to pass through and is arranged so that it can be tightened on the end of the tool holder (10) including the bore (14) and to cooperate with the machining bar (12) in the second support area (22b), the machining system being arranged in such a way that tightening the nut (16) on the tool holder (10) generates bearing forces F1, F2 respectively on the first (22a) and second (22b) bearing areas of the bar (16) which position and hold the machining bar with reference to the tool holder (10) and at the first bearing area (22a), in the longitudinal direction and the cutting direction, **characterized in that** the wall of the opening (20) of the clamping nut (16) has at least one rotational surface (28, 29) coaxial with the thread of the nut (16), the rotational surface (29) having an increasing radius so that the opening widens towards the inside of the nut (16) and the tool holder (10) and **in that** the second support area (22b) is formed by a second conical portion (30) of the machining bar (12), arranged at the second end of the holding zone (12b) in such a way that the bearing force F2 of the nut (16) on the bar (12) at the second support area (22b) comprises a component parallel to the cutting direction for positioning and holding the bar (16) with reference to the tool holder (10) and at the second support area (22b), according to the cutting direction.

2. Machining system according to claim 1, **characterized in that** the rotational surface (29) is a toric surface.

3. Machining system according to claim 1, **characterized in that** the rotational surface (28) is formed by a first conical portion (28).

4. Machining system according to claim 3, **characterized in that** the first conical portion (28) is interrupted and extended by a straight, cylindrical portion (32) with a diameter larger than the corresponding area of the bar (12).

5. Machining system according to any of claims 1 to 4, **characterized in that** the second conical portion (30) of the bar (12) is asymmetric.

6. Machining system according to claim 5, **characterized in that** said bar (12) has a clearance diametrically opposed to the second support area (22b).

7. Machining system according to any of claims 1 to 6, **characterized in that** the second support area (22b) has a boss for contacting the rotational surface (28, 29) of the nut (16).

8. Machining system according to any of claims 1 to 7, **characterized in that** the axis i of the bore (14) and the axis j of the nut (16) are parallel and not confused and **in that** the plane defined by the axes i and j is parallel to the cutting direction.

9. Machining system according to any of claims 1 to 7, **characterized in that** the axis i of the bore (14) intersects the axis j of the nut (16) and **in that** the plane defined by the axes i and j is parallel to the cutting direction.

10. Machining system according to one of the previous claims, **characterized in that** the cross-section of the bore (14) is not circular.

11. Machining system according to claim 10, **characterized in that** the holding area (12b) of the machining bar (12) has a flat support on a plane with the bore (14).
